# EUROPEAN PATENT APPLICATION

(11) **EP 3 691 140 A1**
(43) Date of publication of application: **05.08.2020**
(21) Application number: 19154494.9
(22) Date of filing: 30.01.2019
(51) Int. Cl.: H04B 7/08, G01S 1/08, H04W 56/00

(54) **METHOD AS WELL AS DEVICE FOR TIMESLOT-WISE DETECTION OF AT LEAST ONE RADIO SIGNAL**

(71) Applicant: Rohde & Schwarz GmbH & Co. KG, 81671 München (DE)
(72) Inventor: HISCH, Martin, 81671 München (DE)
(74) Representative: Prinz & Partner mbB

(57) **Abstract**

A method of timeslot-wise detection of at least one radio signal in a cellular radio network. A radio signal is received via at least one radio antenna (15). The radio signal received by the at least one radio antenna (15) is forwarded to at least one radio receiver (14). The radio signal forwarded to the at least one radio receiver (14) is evaluated. The at least one radio receiver (14) is synchronized with a preconfigured frame structure. At least one time slot is selected out of the frame structure. An emitter of the at least one radio signal is located in the at least one time slot selected by direction finding. Further, a device (10) is described.

## Description

The invention relates to a method of timeslot-wise detection of at least one radio signal in a cellular radio network. Further, the invention relates to a device for timeslot-wise detection of at least one radio signal in a cellular radio network.

Operators of a time domain (TD) cellular radio network such as a long term evolution (LTE) network are facing the challenge to detect and eliminate interfering signals in their radio networks since these interfering signals disturb or rather interfere with the wanted signals. In contrast to frequency domain (FD) cellular radio networks in which uplink signals and downlink signals are transmitted in different frequency ranges, time domain cellular radio networks use the same frequency (range) for uplink signals and downlink signals since the respective signals, namely the uplink signals and downlink signals, are transmitted at different times. The respective times are called time slots which are allocated to uplink or rather downlink signals. Accordingly, the time domain (TD) cellular radio network that is assigned to time-division duplexing (TDD) is generally a cellular radio network based on time slots.

For locating an emitter of an interfering signal, directional antennas are typically used in order to retrieve directional information of the signals received by the directional antenna. This technique relates to direction finding. Usually, the directional antenna is assigned to an electronic compass that is used for locating the emitter. In general, the directional information comprises the azimuth that is of importance for locating the source of the interfering signal. For direction finding, a user may alter his position in order to vary the relative orientation, namely azimuth, with respect to the emitter while continuously checking the level of the signal. The higher the level of the signal of interest, for instance the interfering one, the closer to the emitter the user is.

However, locating an emitter of an interfering signal by searching the maximum level of the interfering signal is time consuming. In addition, the required efforts are high due to reflections of the interfering signals which may result in misrouting.

Moreover, direction finding of an interferer, namely an emitter of an interfering signal, in a time domain (TD) cellular radio network is specifically time consuming due to the periodic switching between uplink time slots and downlink time slots.

Therefore, there is a need for a faster and easier way to locate an emitter, particularly in a cellular radio network based on time slots.

The invention provides a method of timeslot-wise detection of at least one radio signal in a cellular radio network, wherein a radio signal is received via at least one radio antenna. The radio signal received by the at least one radio antenna is forwarded to at least one radio receiver. The radio signal forwarded to the at least one radio receiver is evaluated by the following steps:
- Synchronizing the at least one radio receiver with a preconfigured frame structure,
- Selecting at least one time slot out of the frame structure, and
- Direction finding of an emitter of the at least one radio signal in the at least one time slot selected.

Further, the invention provides a device for timeslot-wise detection of at least one radio signal in a cellular radio network, comprising at least one radio antenna configured to receive a radio signal, at least one radio receiver configured to process the radio signal and at least one evaluation unit configured to evaluate the radio signal. The evaluation unit is configured to synchronize the radio receiver with a preconfigured frame structure and to select at least one time slot out of the frame structure. Further, the evaluation unit is configured to locate an emitter of the at least one radio signal in the at least one time slot selected by direction finding techniques.

The invention is based on the idea that an emitter of a radio signal assigned to time slot technique such as a time domain (TD) cellular radio network, for instance a time domain long term evolution network (TD LTE network), can be identified or rather located in a fast and easy manner while synchronizing the radio receiver with the preconfigured frame structure used in the respective cellular radio network. Hence, a specific time slot can be identified and selected out of the preconfigured frame structure that comprises several time slots. For instance, the time slot selected may correspond to a time slot assigned to uplink.

During the specific time slot, a direction finding is done in order to obtain directional information of the radio signal emitted by the emitter, for instance information with regard to azimuth that can be used to locate the emitter.

The direction finding may be based on evaluating a phase difference gathered with a rotating antenna unit (correlative interferometer), wherein the rotating antenna unit comprises the at least one radio antenna. This technique is robust against multipath propagation due to reflection.

Alternatively or additionally, the location of the emitter is determined by cross bearing, namely direction finding with at least two radio receivers or rather at least two antennas.

Accordingly, the emitter of the at least one radio signal can be located in a faster manner regardless whether the radio signal received and processed is a wanted one, namely without any interfering signal portion(s), or rather a faulty signal, namely an interfering signal.

In other words, a timeslot-wise direction finding is provided as the direction finding takes place during the at least one specific time slot selected from the preconfigured frame structure.

The (preconfigured) frame structure may be derived from the at least one radio signal received that was transmitted with a preconfigured frame structure. For this purpose, the evaluation unit is configured to demodulate the radio signal received in order to derive the (preconfigured) frame structure, for instance via evaluation of the baseband data. In other words, the (preconfigured) frame structure used by the radio signal is detected automatically.

Alternatively or additionally, the (preconfigured) frame structure is obtained by selecting a certain communication standard of interest while performing the method of timeslot-wise detection of the at least one radio signal. The respective communication standard selected is assigned to a certain (preconfigured) frame structure so that the frame structure is (indirectly) selected in a manual manner.

The frame structure generally relates to the structure of the different time slots as well as their allocation.

In general, a gated trigger may be applied on the radio signal received in order to identify the specific time slot(s), particularly time slot(s) assigned to uplink. The gated trigger may be applied in a zero span operation mode of the device. In the zero span operation mode, no sweeping takes place. In other words, the device becomes a fixed-tuned radio receiver system. In fact, the zero span operation mode relates to a span of "0 Hz".

Hence, the gated trigger ensures that only signals appearing during the "gate" period are displayed. The gate can be defined graphically in the zero span operation mode in terms of a gate delay and a gate length.

Accordingly, at least one specific time slot of the frame structure is selected, namely the one assigned to uplink.

The device may comprise a specific radio antenna that can be used for direction finding such as a directional antenna. Alternatively, the device has at least one radio antenna and at least one directional antenna.

According to an aspect, the at least one radio receiver is synchronized with a system clock and/or a timing source of the cellular radio network. For instance, a long term evolution (LTE) network uses a system clock. In other applications, namely other cellular radio networks, the synchronization may be done with respect to a relevant timing source that is used by the respective application. In any case, the synchronization with regard to the respective application or rather communication standard ensures that the at least one radio receiver is synchronized with the preconfigured frame structure, namely the time slots.

For instance, the radio receiver is synchronized with an internal clock of the device. The internal clock may be assigned to the system clock or rather the timing source of the cellular radio network.

According to another aspect, the preconfigured frame structure corresponds to a communication standard to be investigated that is used by the cellular radio network. In other words, the preconfigured frame structure used for synchronizing the at least one radio receiver depends on the respective application. Hence, the at least one radio receiver is synchronized in a different way depending on the respective communication standard under investigation.

According to an embodiment, at least one interference is detected in the at least one radio signal such that an interfering emitter is identified. The evaluation unit may be configured to detect at least one interference in the at least one radio signal in order to identify an interfering emitter. The interfering emitter may emit an interfering signal that may disturb a wanted signal wherein both signals are signal portions of the at least one radio signal received by the radio antenna and processed by the radio receiver.

Generally, the at least one radio signal received may comprise wanted signal(s) as well as interfering signal(s) wherein the wanted signal(s) as well as the interfering signal(s) correspond to signal portion(s) of the radio signal.

Particularly, the interfering emitter detected is displayed graphically and/or wherein the interfering emitter detected is written to a flag. Hence, the evaluation unit and the display may be configured to graphically display the interfering emitter detected on the display. Further, the evaluation unit and the display may be configured to write the information with regard to the interfering emitter detected to a flag. Thus, information regarding the interfering emitter detected is outputted or rather stored. Hence, the user can be informed appropriately.

According to another aspect, the result of the direction finding is post-processed. Hence, a post-processor is provided that is connected to the evaluation unit, wherein the post-processor is configured to post-process the result of the direction finding. Generally, any kind of post-processing can be done by the post-processor. The post-processing may result in a graphical output in order to inform a user or rather in providing the result to another apparatus. Moreover, a trigger or rather a filter may be applied while post-processing the result of the direction finding.

Generally, a level trigger may be applied in order to separate a real interfering signal (portion) from noise. This trigger may be applied on the (preliminary) result of the direction finding or rather during direction finding while applying a respective filter.

For instance, the location of the emitter identified by the direction finding is graphically displayed. Accordingly, a display is provided with which the evaluation unit is connected. Particularly, the evaluation unit and the display are configured to graphically display the identified location of the emitter on the display. The graphic illustration may correspond to an azimuth dial, an illustration of the respective direction and/or signal-beam while simultaneously displaying a map. In addition, triangulation may be displayed on a map. Generally, a map may be displayed such that locating the emitter is simplified.

Alternatively or additionally, a flag for a correct or rather faulty signal is set. The post-processor may be configured to set a flag for a correct or rather faulty signal. Thus, the user is informed about the kind of source of the at least one radio signal.

According to an aspect, the radio antenna and the radio receiver are connected with each other so that the radio signal received by the radio antenna is forwarded to the radio receiver. In fact, the at least one radio signal is received via the radio antenna wherein the received signal is forwarded to the radio receiver for measuring or rather processing purposes.

Further, the device may be a direction finder with a directional antenna unit. Since the device is configured to locate an emitter of the at least one radio signal by direction finding in the at least one time slot selected, the device outputs a bearing value as a result. Thus, the device corresponds to a direction finder.

The directional antenna unit may comprise several antenna elements or rather a single one, for instance the at least one radio antenna.

In general, the direction finding may be based on evaluating a phase difference gathered with a rotating antenna unit (correlative interferometer). The location of the emitter may also be determined directly by a cross bearing, namely direction finding with at least two radio receivers or rather at least two antennas.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of one representative embodiment of a device according to the present disclosure;
- Figure 2 shows a flow-chart representing one embodiment of one representative embodiment of a method according to the present disclosure;
- Figure 3 shows a schematic illustration of a diagram on the display of the device according to Figure 1 when the method shown in Figure 2 is performed;
- Figure 4 shows a schematic illustration of a spectrum received on the display of the device according to Figure 1, wherein the spectrum comprises downlink signals and uplink signals; and
- Figure 5 shows the spectrum received from Figure 4 when a gated trigger is applied.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

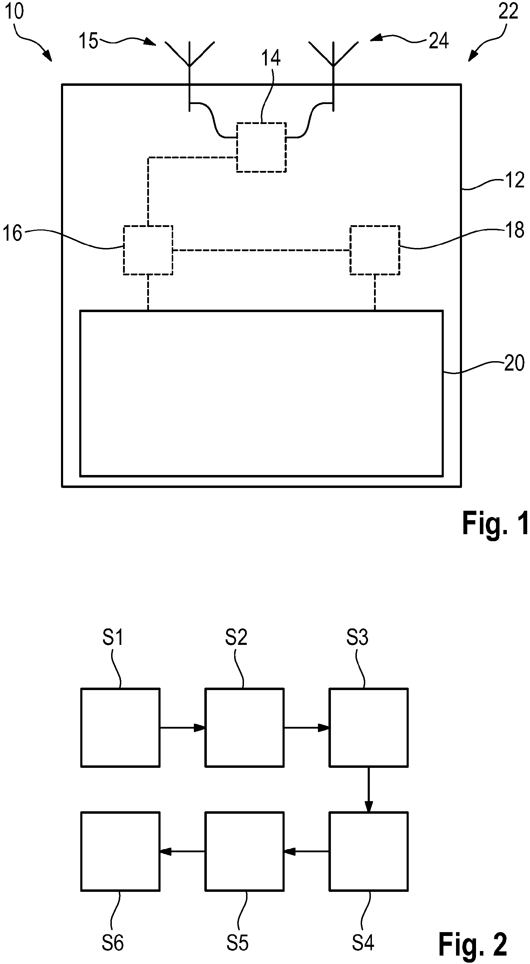

In Figure 1, a device 10 for timeslot-wise detection of at least one radio signal in a cellular radio network is schematically shown. Particularly, the cellular radio network is based on time slots such as a time domain cellular radio network, for instance a long term evolution (LTE) network.

The device 10 comprises a housing 12 that encompasses a radio receiver 14 which is connected to a radio antenna 15. Via the radio antenna 15, the device 10 is enabled to receive a radio signal, in particular a radio signal assigned to the cellular radio network.

Further, the radio receiver 14 is connected to an evaluation unit 16 that is also encompassed in the housing 12.

The evaluation unit 16 is connected to a post-processor 18 that is also located within the housing 12.

In addition, the device 10 comprises a display 20 which is connected with at least one of the evaluation unit 16 and the post-processor 18. Accordingly, information forwarded to the display 20 via the evaluation unit 16 and/or the post-processor 18 is displayed on the display 20 so that a user of the device 10 is informed appropriately.

The device 10 generally corresponds to a direction finder 22 as will be described hereafter with respect to Figure 2 in which a flow-chart is shown that illustrates a method of timeslot-wise detection of at least one radio signal in the cellular radio network.

Accordingly, the device 10 may have a directional antenna unit 24. The directional antenna unit 24 may be separately formed with respect to the radio antenna 15. Alternatively, the radio antenna 15 is established by the directional antenna unit 24.

In general, the directional antenna unit 24 may comprise several antenna elements, in particular at least the radio antenna 15.

The respective method shown in Figure 2 and described hereinafter can generally be performed by the device 10 shown in Figure 1, in particular the integrated evaluation unit 16.

In a first step S1, a radio signal is received via the at least one radio antenna 15 wherein the radio signal is assigned to the cellular radio network.

In a second step S2, the radio signal received by the radio antenna 15 is forwarded to the at least one radio receiver 14 that is connected to the radio antenna 15.

In a third step S3, the radio signal forwarded to the radio receiver 14 is processed by the radio receiver 14 internally. In fact, the radio receiver 14 measures the radio signal received so as to gather information that is provided to the evaluation unit 16 connected to the radio receiver 14, for instance baseband data.

The information gathered may be assigned to time information, amplitude information and/or phase information which is used by the evaluation unit 16 for direction finding purposes.

In a fourth step S4, the evaluation unit 16 evaluates the radio signal wherein the evaluation unit 16 synchronizes the radio receiver 14 with a preconfigured frame structure, namely the arrangement of the time slot(s) used for uplink signals as well as downlink signals.

The preconfigured frame structure may be derived from the radio signal received during the evaluation step and/or the measuring step done by the radio receiver 14. Alternatively, the user may have selected a certain communication standard to be investigated at the beginning such that a certain preconfigured frame structure is expected due to the communication standard selected.

During the synchronizing step, the at least one radio receiver 14 is synchronized with a system clock and/or a timing source of the respective cellular radio network. The system clock or rather timing source is based on the application or rather the communication standard under investigation which in turn is associated to the cellular radio network.

In other words, the preconfigured frame structure that is used for synchronizing the radio receiver 14 corresponds to the respective communication standard under investigation since the communication standard is assigned to the cellular radio network.

For instance, the radio receiver 14 is synchronized with an internal clock.

In a fifth step S5, the evaluation unit 16 selects at least one time slot out of the frame structure after the radio receiver 14 was synchronized with the preconfigured frame structure. The selected time slot may correspond to a time slot that is assigned to an uplink.

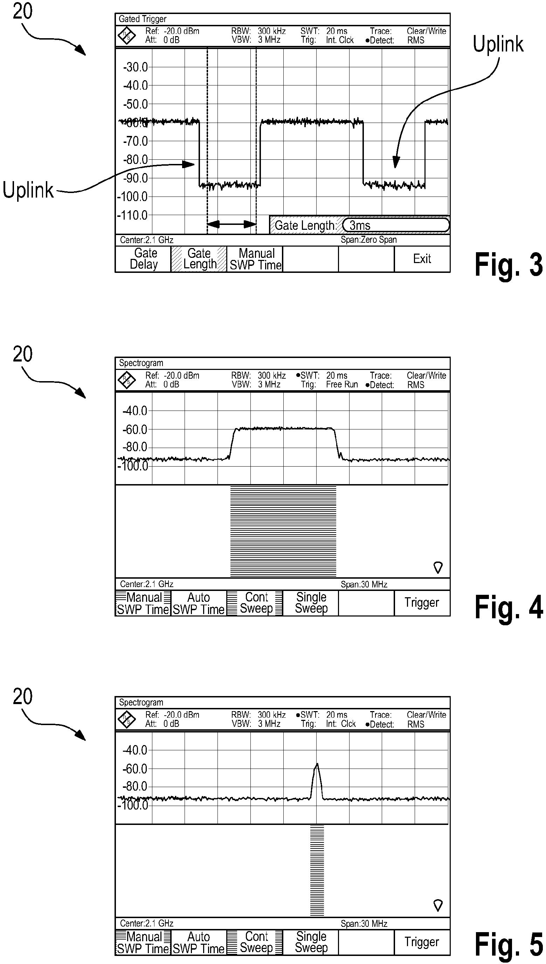

For instance, a gated trigger is applied on the radio signal received in order to identify the specific time slot(s), particularly time slot(s) assigned to uplink. This is schematically illustrated in Figure 3 wherein the time slots assigned to uplink are marked appropriately. The gated trigger may be applied in a zero span operation mode of the device 10 in which no sweeping takes place. In other words, the device 10 becomes a fixed-tuned radio receiver.

Hence, certain gate settings may be selected used to determine gate delay and gate length.

The specific time slot(s) can be identified visually on the display 20 of the device 10 when displaying the radio signal on which the gated trigger is applied as indicated in Figure 3.

In addition, a sweep time may be adjusted manually. Hence, visualization and selection of the respective time slot, namely a time slot assigned to uplink, become easier.

Gate delay and gate length can be retrieved from the two vertical lines shown on the display 20 in the zero span operation mode of the device 10. The gate delay can be retrieved on the left and the gate length can be retrieved on the right; please refer to Figure 3. The gate length may typically be in the order of 1 ms per uplink time slot.

The gated trigger ensures that at least one specific time slot, in particular a time slot assigned to uplink, is selected from the frame structure.

This enables the user to identify a potential interferer in the spectrum received as illustrated in Figures 4 and 5. In Figure 4, the spectrum received is shown without any gated trigger applied whereas the same spectrum is shown in Figure 5 when the gated trigger is applied for identifying time slot(s) assigned to uplink.

In a sixth step S6, a direction finding of an emitter of the at least one radio signal takes place in the at least one time slot selected previously. Accordingly, direction finding is done in the specific time slot determined previously.

During the evaluation, at least one interference is detected in the radio signal, namely an interfering signal portion that may disturb the wanted signal(s) of the cellular radio network. While detecting the interference, an interfering emitter may be located appropriately due to the direction finding that takes place in the specific time slot selected.

In fact, with the gated trigger enabled, the device 10 will output all signals in the specific time slot, both normal traffic and other signals such as interferers.

The output of the direction finding is post-processed irrespective of the kind of signal the radio signal received relates to. Thus, a wanted signal as well as an interfering signal is post-processed. However, the post-processing of the different signals may be different.

For instance, the result of the direction finding is displayed graphically on the display 20. For this purpose, the evaluation unit 16 may forward the respective information to the display 20 for visualizing the respective information.

The graphic illustration on the display 20 may be an azimuth dial, an illustration of the respective direction and/or a signal-beam. Simultaneously a map is displayed so that the user of the device 10 is enabled to identify the direction in a faster and simpler manner. In addition, a triangulation may be displayed on a map.

In addition, the signal of the radio receiver 14, particularly each radio receiver 14 upon selection, may be displayed in the zero span operation mode of the device 10 to enable the user to check the time slot selected.

Further, the emitter detected is written to a flag so that the respective information may be stored.

In fact, the result of the direction finding may be post-processed by the post processor 18. For instance, a filter or rather a trigger may be applied on the result of the direction finding. Hence, noise can be eliminated by post-processing techniques.

Since the direction finding of an emitter of the at least one radio signal takes place in the selected time slot being a specific one, it is ensured that an interfering signal may be detected in a faster and simpler manner since the time slot selected out of the frame structure may be a time slot assigned to uplink.

Accordingly, direction finding of a radio emitter, namely an emitter of a radio signal, is improved in a radio network based on time-slot technique such as a time domain (TD) radio network.

## Claims

1. A method of timeslot-wise detection of at least one radio signal in a cellular radio network, wherein a radio signal is received via at least one radio antenna (15), wherein the radio signal received by the at least one radio antenna (15) is forwarded to at least one radio receiver (14), and wherein the radio signal forwarded to the at least one radio receiver (14) is evaluated by the following steps:
- Synchronizing the at least one radio receiver (14) with a preconfigured frame structure,
- Selecting at least one time slot out of the frame structure, and
- Direction finding of an emitter of the at least one radio signal in the at least one time slot selected.

2. The method according to claim 1, wherein the at least one radio receiver (14) is synchronized with a system clock and/or a timing source of the cellular radio network.

3. The method according to claim 1 or 2, wherein the preconfigured frame structure corresponds to a communication standard to be investigated that is used by the cellular radio network.

4. The method according to any of the preceding claims, wherein at least one interference is detected in the at least one radio signal such that an interfering emitter is identified.

5. The method according to claim 4, wherein the interfering emitter detected is displayed graphically and/or wherein the interfering emitter detected is written to a flag.

6. The method according to any of the preceding claims, wherein the result of the direction finding is post-processed.

7. The method according to any of the preceding claims, wherein the location of the emitter identified by the direction finding is graphically displayed and/or wherein a flag for a correct or rather faulty signal is set.

8. A device (10) for timeslot-wise detection of at least one radio signal in a cellular radio network, comprising at least one radio antenna (15) configured to receive a radio signal, at least one radio receiver (14) configured to process the radio signal and at least one evaluation unit (16) configured to evaluate the radio signal, wherein the evaluation unit (16) is configured to synchronize the radio receiver (14) with a preconfigured frame structure and to select at least one time slot out of the frame structure, and wherein the evaluation unit (16) is configured to locate an emitter of the at least one radio signal in the at least one time slot selected by direction finding techniques.

9. The device (10) according to claim 8, wherein the radio antenna (15) and the radio receiver (14) are connected with each other so that the radio signal received by the radio antenna (15) is forwarded to the radio receiver (14).

10. The device (10) according to claim 8 or 9, wherein the at least one radio receiver (14) is synchronized with a system clock and/or a timing source of the cellular radio network.

11. The device (10) according to any of claims 8 to 10, wherein the preconfigured frame structure corresponds to a communication standard to be investigated that is used by the cellular radio network.

12. The device (10) according to any of claims 8 to 11, wherein a post-processor (18) is provided that is connected to the evaluation unit (16), wherein the post-processor (18) is configured to post-process the result of the direction finding, in particular wherein the post-processor (18) is configured to set a flag for a correct or rather faulty signal.

13. The device (10) according to any of claims 8 to 12, wherein a display (20) is provided with which the evaluation unit (16) is connected, in particular wherein the evaluation unit (16) and the display (20) are configured to graphically display the identified location of the emitter on the display (20).

14. The device (10) according to any of claims 8 to 13, wherein the evaluation unit (16) is configured to detect at least one interference in the at least one radio signal in order to identify an interfering emitter, in particular wherein the evaluation unit (16) and the display (20) are configured to graphically display the interfering emitter detected on the display (20) and/or wherein the evaluation unit (16) and the display (20) are configured to write the interfering emitter detected to a flag.

15. The device (10) according to any of claims 8 to 14, wherein the device (10) is a direction finder (22) with a directional antenna unit (24).
